# EUROPÄISCHE PATENTSCHRIFT

(11) **EP 0 598 183 B1**
(45) Veröffentlichungstag und Bekanntmachung des Hinweises auf die Patenterteilung: **06.10.1999**
(21) Anmeldenummer: 93110574.6
(22) Anmeldetag: 02.07.1993
(51) Int. Cl.: F01D 15/10

(54) **Stromgewinnungsanlage**
Turbogenerator set
Combinaison turbine-génératrice

(30) Priorität: 18.11.1992 DE 9215696 U
(43) Veröffentlichungstag der Anmeldung: 25.05.1994
(73) Patentinhaber: PILLER-GmbH, 37520 Osterode am Harz (DE); BOC AG, CH-4012 Basel (CH)
(72) Erfinder: Canders, Wolf-Rüdiger, Dr., D-37520 Osterode am Harz (DE); Ueffing, Norbert, D-37520 Osterode am Harz (DE); Reuter, Klaus, D-79639 Grenzach-Wyhlen (DE)
(74) Vertreter: Hoeger, Stellrecht & Partner

(56) Entgegenhaltungen:
- EP-A- 0 009 843
- EP-A- 0 462 724
- CH-A- 344 128
- DE-A- 2 515 315
- FR-A- 2 336 550
- GB-A- 1 491 710
- COMPRESSED AIR Bd. 90, Nr. 4 , 1. April 1985 , PHILLIPSBURG US Seiten 30 - 33 'suspending rotating shafts in midair'

## Beschreibung

Die Erfindung betrifft eine Stromgewinnungsanlage, umfassend eine Gasturbine mit einem Turbinenrad und einen Generator mit einem vom Turbinenrad angetriebenen Rotor.

Bei den bislang bekannten Stromgewinnungsanlagen, welche beispielsweise bei der Expansion von Kryogas oder Erdgas eingesetzt werden, um die beim Expandieren der Gase freiwerdende Energie zurückzugewinnen, werden üblicherweise eine Turbine und ein von dieser angetriebener, aber getrennter Generator eingesetzt.

Da die Turbine mit hohen Drehzahlen läuft und außerdem hohe Temperaturgradienten möglich sein müssen, treten im Bereich der Lagerungen der bekannten Anlagen Probleme insbesondere durch Reibung und/oder Leckage und/oder Verschmutzung des die Gasturbine durchströmenden Gases auf.

Die Druckschrift WO-A-87/00360 offenbart eine Stromgewinnungsanlage bei welcher eine Turbine einen auf Magnetlagern gelagerten Generator treibt. Hinsichtlich der Lagerung des Rotors werden jedoch keine detaillierten Angaben gemacht, es wird jedoch lediglich angegeben, daß der eine Innenpol-Radialfeldmaschine umschließende Raum mit einem druckdichten Deckel versehen ist. Ferner ist mit viel Phantasie zu erkennen, daß eine von einem Turbineninnenrad in den Raum mündende Öffnung vorgesehen ist, in diesem Fall liegt jedoch der Raum auf dem Druck am Gaseinlaß der Turbine.

Weder Generator noch Turbine sind auf hohe Drehzahlen ausgelegt.

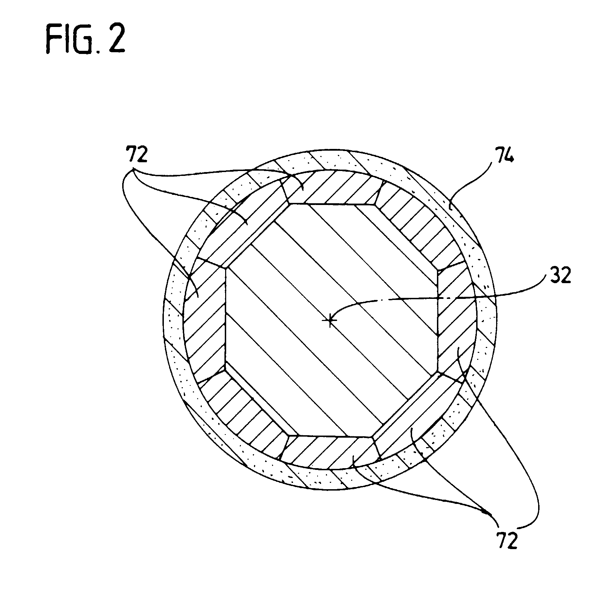

Die EP-A-0 462 724 offenbart die Kombination einer Turbine und eines Generators, bei welcher das Turbinenrad und der Rotor des Generators eine sich als Ganzes drehende Rotoreinheit bilden. Ferner kann bei dem Ausführungsbeispiel gemäß Fig. 2 davon ausgegangen werden, daß das Anlagengehäuse ein Turbineninnenraum der Turbine und einen Generatorinnenraum druckfest und gasdicht umschließt.

Die EP-B-009 843 offenbart eine Entspannungsturbinen-Generator-Einheit, bei welcher eine Absenkung des Druckniveaus gegenüber dem Gaseinlaß und eine Absenkung des Drucks im Generatorinnenraum vorgesehen ist.

Der Erfindung liegt das Problem zugrunde, eine Stromgewinnungsanlage mit einem Generator zu schaffen, welcher in bezug auf Rotorfestigkeit und Gasreibung für besonders hohe Drehzahlen geeignet ist.

Diese Aufgabe wird bei eine Stromgewinnungsanlage umfassend eine Gasturbine mit einem Turbinenrad und einen Generator mit einem vom Turbinenrad angetriebenen Rotor, wobei die Turbine und der Generator zu einer Einheit zusammengefaßt sind und das Turbinenrad und der Rotor eine sich als Ganzes drehende Rotoreinheit bilden, die in dem Anlagengehäuse durch Magnetlagereinheiten berührungslos drehbar gelagert ist, und wobei das Anlagengehäuse einen Turbineninnenraum der Turbine und einen Generatorinnenraum des Generators druckfest und gasdicht umschließt, erfindungsgemäß dadurch gelöst, daß der Generator als Synchrongenerator ausgebildet ist, dessen Rotor auf der Welle sitzende und radial zur Drehachse durch eine Bandage gesicherte Magnete trägt, daß der Generatorinnenraum von einem Kühlgas durchströmt ist, welches einen Spalt zwischen dem Rotor und dem Stator durchströmt und dabei die Rotoreinheit oberflächlich kühlt und daß der Generatorinnenraum auf einem gegenüber dem Gaseinlaß abgesenkten Druckniveau gehalten ist, welches die Gasreibung im Generatorinnenraum reduziert.

Der Vorteil der erfindungsgemäßen Lösung ist somit darin zu sehen, daß durch den erfindungsgemäßen Rotoraufbau die Zusammenfassung von Turbinenrad und Rotor zu einer sich als Ganzes drehenden Rotoreinheit eine einfache Konstruktion möglich ist, und daß durch die Verwendung von Magnetlagereinheiten zur Lagerung der Rotoreinheit die Reibungsverluste entscheidend verringert werden und somit hohe Drehzahlen problemlos möglich werden und darüber hinaus auch keine Verunreinigung des die Gasturbine treibenden Prozeßgases durch aus den Lagern austretende Schmier- oder Schmutzstoffe erfolgt.

Ein weiterer Vorteil der erfindungsgemäßen Lösung ist darin zu sehen, daß das Anlagengehäuse neben dem Turbineninnenraum auch den Generatorinnenraum druckfest und gasdicht umschließt, so daß die Möglichkeit gegeben ist, einerseits den Rotor effizient zu kühlen und andererseits in dem Generatorinnenraum vorliegendes Gas unter definierten Druckverhältnissen zu halten und durch entsprechende Absenkung des Drucks bei den erforderlichen hohen Drehzahlen die Gasreibung zu reduzieren.

Grundsätzlich ist eine Lagerung der Rotoreinheit dadurch möglich, daß die Rotoreinheit durch zwei in axialem Abstand voneinander angeordnete Magnetlagereinheiten gelagert ist.

Insbesondere für hohe Drehzahlen ist es besonders vorteilhaft, wenn die Rotoreinheit axial gesehen beiderseits des Rotors mit jeweils einer Magnetlagereinheit gelagert ist.

In diesem Fall ist eine Magnetlagereinheit vorteilhafterweise zwischen dem Rotor und dem Turbinenrad angeordnet, so daß das Turbinenrad auf einem frei über diese Magnetlagereinheit überstehenden Ende der Rotoreinheit sitzt.

Hinsichtlich der Ausbildung der Magnetlagereinheiten wurden bislang keine näheren Angaben gemacht. So sieht ein vorteilhaftes Ausführungsbeispiel vor, daß jede Magnetlagereinheit mindestens ein magnetisches Radiallager umfaßt.

Um zusätzlich auch eine axiale Lagerung der Rotoreinheit zu erreichen, ist es möglich, einer der Magnetlagereinheiten ein magnetisches Axiallager zuzuordnen.

Aus Gründen einer kompakten Konstruktion ist es jedoch noch vorteilhafter, wenn jede Magnetlagereinheit die Rotoreinheit gegen eine Bewegung des Rotors in jeweils entgegengesetzte axiale Richtungen magnetisch lagert, das heißt daß jede Magnetlagereinheit die Hälfte eines magnetischen Axiallagers umfaßt.

Hinsichtlich der Art der magnetischen Lagerung wurden bislang keine näheren Angaben gemacht. So ist es besonders vorteilhaft, wenn die magnetische Lagerung durch die Magnetlagereinheiten eine aktive magnetische Lagerung darstellt.

Vorzugsweise ist dabei für die aktive magnetische Lagerung eine Lageregelung mit Sensoren vorgesehen, welche die Rotoreinheit in einer bestimmten Position führt.

Insbesondere bei den magnetischen Radiallagern ist die Lagerung so ausgebildet, daß durch Ansteuerung des Stators der Radiallager eine Drehachse der Rotoreinheit festlegbar ist.

Um die hohen Drehzahlen zu realisieren ist es besonders vorteilhaft, wenn die Lageregelung oberhalb einer bestimmten Drehzahl als Drehachse für die Rotoreinheit die Schwerpunktachse auswählt.

Um auch bei niederen Drehzahlen eine vorteilhafte Lagerung zu erhalten ist es ferner zweckmäßig, wenn die Lageregelung unterhalb der bestimmten Drehzahl auf eine geometrische Achse des Rotors als Drehachse regelt.

Hinsichtlich der Ausbildung der Radiallager wurden bislang ebenfalls keine näheren Angaben gemacht. So sieht ein vorteilhaftes Ausführungsbeispiel vor, daß das Radiallager auf eine Welle der Rotoreinheit aufgeschrumpfte Blechpakete und einen im Anlagengehäuse angeordneten Ständer umfaßt.

Hinsichtlich der Ausbildung der Axiallager ist es vorteilhaft, wenn diese eine auf einer Welle der Rotoreinheit sitzende ferromagnetische Scheibe und einen im Anlagengehäuse angeordnete Ständer umfassen.

Um sicherzustellen, daß bei abgeschalteten Magnetlagereinheiten oder bei einem Ausfall der Magnetlagereinheiten keine Zerstörung des Generators erfolgt, ist vorteilhafterweise vorgesehen, daß die Rotoreinheit noch zusätzlich durch bei Ausfall der Magnetlagereinheit wirksame Fanglager gelagert ist. Diese Fanglager sind vorzugsweise mechanische Lager, die entweder als Kugellager oder als Gleitlager ausgebildet sind.

Darüber hinaus bewirken die Fanglager vorzugsweise ebenfalls eine radiale und axiale Lagerung der Rotoreinheit, wenn diese in den Fanglagern und nicht in den Magnetlagern läuft.

Hinsichtlich der Ausbildung des Anlagengehäuses wurden im vorstehenden keine näheren Angaben gemacht. So sieht ein vorteilhaftes Ausführungsbeispiel vor, daß das Anlagengehäuse ein Turbineninnenraum der Turbine und einen Generatorinnenraum des Generators gasdicht umschließt.

Mit einer derartigen Ausbildung des Anlagengehäuses lassen sich insbesondere Leckagen des Prozeßgases besonders vorteilhaft beherrschen, da in den Generatorinnenraum eintretendes Leckgas nicht unkontrolliert abströmen kann.

Eine besonders vorteilhafte Lösung sieht vor, daß vom Generatorinnenraum ein von der Rotoreinheit durchsetzter Verbindungskanal zum Turbineninnenraum führt und daß der Generatorinnenraum, der Verbindungskanal und der Turbineninnenraum von dem Anlagengehäuse gasdicht und druckfest umschlossen sind. In diesem Fall bilden der Turbineninnenraum mit dem Verbindungskanal und dem Generatorinnenraum eine Einheit, die als solche gasdicht und druckfest umschlossen ist, so daß einerseits keine Probleme bei einem Leckgasstrom vom Turbineninnenraum in den Generatorinnenraum auftreten und andererseits in dem Generatorinnenraum definierte Druckverhältnisse einstellbar sind, um die Gasreibung zu reduzieren und entweder den Leckgasstrom vom Turbineninnenraum in den Generatorinnenraum durch entsprechenden Druck zu unterdrücken oder das vom Turbineninnenraum in den Generatorinnenraum strömende Leckgas definiert abzuführen.

Insbesondere diese Ausbildung der erfindungsgemäßen Lösung ergänzt sich vorteilhaft mit der Verwendung der Magnetlagereinheiten, da von der Gasturbine in den Generator und insbesondere den Generatorinnenraum strömendes Gas weder im Bereich der Lagerung des Turbinenrads noch im Bereich der Lagerung des Rotors durch die Lager eine Verschmutzung erfährt und zusätzlich die vorstehend genannten Vorteile auftreten.

Um aufgrund der hohen Drehzahlen im Bereich der Magnetlagereinheiten auftretende Wärme abzuführen, ist vorteilhafterweise vorgesehen, daß die Magnetlagereinheiten von einem Kühlgas durchströmbar sind.

Das Kühlgas könnte rein theoretisch die Magnetlagereinheiten in unterschiedlichen Richtungen durchströmen. Besonders vorteilhaft ist es, wenn das Kühlgas die Magnetlagereinheiten im wesentlichen in axialer Richtung durchströmt.

Noch vorteilhafter läßt sich die Kühlung der Magnetlagereinheiten dann ausführen, wenn der Generatorinnenraum von einem Kühlgas durchströmt ist, wobei dieses Kühlgas vorteilhafterweise den Generatorinnenraum in einem die Rotoreinheit umgebenden Bereich durchströmt und somit an den entsprechenden Abschnitten der Rotoreinheit oberflächlich entlangströmt.

Als Kühlgas kann grundsätzlich ein beliebiges Gas Verwendung finden. Besonders vorteilhaft ist es jedoch, wenn das Kühlgas mit dem die Turbine treibenden Prozeßgas identisch ist, da in diesem Fall ein Leckgasstrom durch den Verbindungskanal hindurch keinerlei Probleme verursacht und insbesondere keinerlei Verunreinigungen beim Prozeßgas.

Das zum Kühlen der Magnetlagereinheiten verwendete Kühlgas kann dabei unterschiedlichster Herkunft sein. Im einfachsten Fall ist vorgesehen, daß das Kühlgas aus dem die Turbine durchströmenden Prozeßgasstrom stammt.

Dies ist beispielsweise dadurch erreichbar, daß das Kühlgas das vom Turbineninnenraum in den Generatorinnenraum durch den Verbindungskanal einströmende Leckgas ist.

Dieses Leckgas läßt sich dann beispielsweise im Generatorinnenraum in einem der Gasturbine abgewandten Bereich sammeln und abführen.

Um eine definierte Kühlung der Magnetlagereinheiten zu erreichen, und insbesondere in dem Fall, daß das von dem Turbineninnenraum kommende Leckgas keine ausreichende Kühlwirkung hat, da dieses vor Einströmen in die Gasturbine beispielsweise aufgeheizt wurde, ist vorgesehen, daß zur Kühlung der Magnetlagereinheiten externes Kühlgas zugeführt und wieder abgeführt wird.

Die Führung des externen Kühlgases durch die Magnetlagereinheiten und gegebenenfalls auch durch den Generatorinnenraum läßt sich in unterschiedlichster Art und Weise durchführen. So wäre es beispielsweise grundsätzlich möglich, das Kühlgas in axialer Richtung entweder in Richtung auf die Gasturbine zu oder von der Gasturbine weg strömen zu lassen.

Insbesondere dann, wenn das externe Kühlgas zur Ergänzung der Kühlwirkung des Leckgases dienen soll, ist es jedoch vorteilhaft, wenn das externe Kühlgas in axialer Richtung von der Turbine weg die Magnetlagereinheiten durchströmt.

Eine besonders vorteilhafte Lösung sieht dabei vor, daß das externe Kühlgas zwischen dem Turbinenrad und der dem Turbinenrad nächstliegenden Magnetlagereinheit zugeführt wird und in axialer Richtung von der Turbine weg den Generatorinnenraum durchströmt.

In diesem Fall ist dann vorteilhafterweise vorgesehen, daß das Kühlgas auf einer der Turbine abgewandten Seite aus dem Generatorinnenraum abführbar ist.

Besonders vorteilhaft ist es dabei, wenn das Kühlgas im Bereich des Verbindungskanals zuführbar ist.

Um im Falle einer zu hohen Temperatur des von dem Turbineninnenraum in den Generatorinnenraum einströmenden Leckgasstromes den Leckgasstrom möglichst klein zu halten ist vorteilhafterweise vorgesehen, daß in dem Verbindungskanal ein gasstromreduzierendes Element angeordnet ist.

Dieses gasstromreduzierende Element ist beispielsweise als berührungslose Dichtung, vorzugsweise als Labyrinthdichtung, ausgeführt.

Wie bereits vorstehend erwähnt, ist es vorteilhaft, um die Gasreibung im Generatorinnenraum zu reduzieren, den Generatorinnenraum auf einem definierten Druckniveau zu halten.

Vorzugsweise ist dabei das Druckniveau im Generatorinnenraum so gewählt, daß es unter dem Druck an einem Gaseinlaß der Turbine liegt.

Eine besonders vorteilhafte Lösung sieht vor, daß das Druckniveau im Generatorinnenraum einem Druckniveau an einem Gasauslaß der Turbine entspricht.

Um durch den Generator möglichst wenig Wärme zu erzeugen, die wiederum aus dem Generatorinnenraum abgeführt werden muß, ist vorteilhafterweise vorgesehen, daß der Generator ein permanent erregter Synchrongenerator ist.

Insbesondere ist es dabei zweckmäßig, wenn der Rotor ein elektrisch passiver Rotor ist, so daß zum Rotor keine Stromzuführungen hingeführt werden müssen, sondern lediglich zu einem Stator des Generators.

Um auch die im Stator auftretende Wärme optimal abführen zu können, ist vorzugsweise vorgesehen, daß der Stator gekühlt ist. Beispielsweise könnte auch der Stator durch Kühlgas gekühlt werden, welches zweckmäßigerweise durch im Stator vorgesehene Kühlgaskanäle strömt. Noch vorteilhafter ist es jedoch, insbesondere aufgrund der besseren Ankopplungen, wenn der Stator flüssigkeitsgekühlt ist.

Die erfindungsgemäße Stromgewinnungsanlage läßt sich besonders vorteilhaft dann einsetzen, wenn dem Generator ein Umrichter zur Erzeugung einer üblichen standardisierten Netzspannung mit standardisierter Netzfrequenz für ein öffentliches Stromversorgungsnetz nachgeschaltet ist, da der Generator aufgrund des auf der Rotoreinheit sitzenden Rotors eine Wechselspannung mit stark wechselnder und der Drehzahl der Rotoreinheit entsprechender Frequenz erzeugt, welche nicht zur Einspeisung in ein öffentliches Netz geeignet ist.

Darüber hinaus sieht ein besonders vorteilhaftes Einsatzfeld der erfindungsgemäßen Stromgewinnungsanlage vor, daß die Turbine eine Expansionsturbine ist, um die bei der Expansion von Gasen frei werdende Energie zurückzugewinnen, wobei es sich beispielsweise um die Erdgasexpansion bei Fernleitungen oder um die Gasexpansion in der Kryotechnik handeln kann.

Weitere Merkmale und Vorteile sind Gegenstand der nachfolgenden Beschreibung sowie der zeichnerischen Darstellung eines Ausführungsbeispiels.

In der Zeichnung zeigen:
- Fig. 1: einen schematischen Längsschnitt durch eine erfindungsgemäße Stromgewinnungsanlage und
- Fig. 2: einen Schnitt durch einen Rotor längs Linie 2-2.

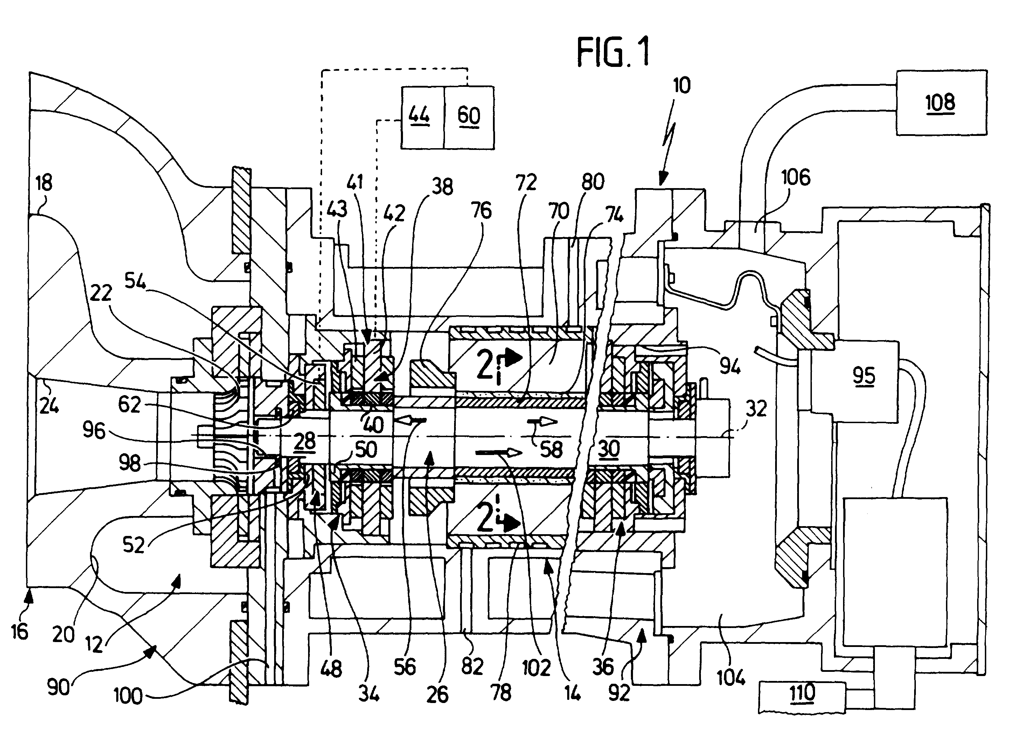

Ein Ausführungsbeispiel einer erfindungsgemäßen Stromgewinnungsanlage, dargestellt in Fig. 1, umfaßt ein als Ganzes mit 10 bezeichnetes Anlagengehäuse, in welchem eine Gasturbine 12 und ein Generator 14 zu einer Einheit zusammengefaßt sind.

Die Gasturbine 12 umfaßt ein Turbinengehäuse 16, welche als Gasexpansionsturbine ausgebildet ist und einen Einlaßkanal 18 für das zu expandierende Prozeßgas aufweist, welcher zu einem Innenraum 20 der Gasturbine führt, in welchem ein Turbinenrad 22 drehbar angeordnet ist. Von diesem Turbineninnenraum 20 führt wiederum ein Auslaßkanal 24 weg, in welchem das expandierte Gas abströmt.

Das Turbinenrad 22 ist Teil einer als Ganzes mit 26 bezeichneten Rotoreinheit, welche eine das Turbinenrad 22 tragende Welle 28 und einen auf der Welle 28 sitzenden Rotor 30 des Generators 14 umfaßt. So wird bei Antrieb des Turbinenrads 22 die gesamte Rotoreinheit 26 in Drehung versetzt und damit auch der Rotor 30 des Generators 14 um eine Drehachse 32 mit der Drehzahl des Turbinenrades 22 rotierend angetrieben.

Die Rotoreinheit 26 ist dabei im Anlagengehäuse 10 durch zwei in Richtung der Drehachse 32 im Abstand voneinander angeordnete Magnetlagereinheiten 34, 36 berührungslos gelagert, wobei die Magnetlagereinheiten 34 und 36 in Richtung der Drehachse 32 gesehen beiderseits des Rotors 30 angeordnet sind.

Jede der Magnetlagereinheiten 34, 36 umfaßt ein magnetisches Radiallager 38, welches einerseits ein auf die Welle 28 aufgeschrumpftes ringförmiges Blechpaket 40 aufweist und andererseits einen Ständer 41 mit einem Stator 42 aus geschichteten Elektroblechen, deren Pole von Spulen 43 umgeben sind. Elektromagnetisch ist dabei jeder Stator 42 in 4 Quadranten mit je einem Nord- und Südpol aufgeteilt, so daß jedes Radiallager 38 zwei aktive Achsen aufweist, von denen jede von zwei gegenüberliegenden Quadranten gebildet wird. Die auf die Rotoreinheit 26 wirkenden Gewichtskräfte werden durch die zwei oberen Quadranten jedes Radiallagers 38 aufgefangen, da dieses Radiallager nur Zugkräfte entwickeln kann.

Ferner umfaßt jedes Radiallager 38 einen zeichnerisch in Fig. 1 nicht dargestellten Sensorring, dessen Signale von einer Lageregelung 44 ausgewertet werden, die die Achsen so steuert, daß der Rotor 26 um die festgelegte Drehachse 32 rotiert.

Neben dem Radiallager 38 umfaßt jede Magnetlagereinheit 34, 36 noch eine Hälfte 48 eines Axiallagers, wobei jede Hälfte 48 des Axiallagers eine auf der Welle 28 sitzende ferromagnetische Scheibe 50 und einen im Anlagengehäuse 10 sitzenden Ständer 52 umfaßt, in welchen die Windungen einer elektromagnetischen Spule 54 eingelassen sind.

Jede Hälfte 48 des Axiallagers wirkt dabei so, daß auf die ferromagnetische Scheibe 50 von dem Ständer 52 Zugkräfte ausgeübt werden, welche die ferromagnetische Scheibe 50 in Richtung des Ständers 52 mit einer Kraft beaufschlagen.

Die jeweiligen Hälften 48 der Axiallager sind in den Magnetlagereinheiten 34 und 36 dabei so angeordnet, daß sie gegeneinander wirkende Axialkräfte 56 bzw. 58 auf die Rotoreinheit 26 ausüben und somit die Rotoreinheit stabilisieren, wobei die beiden Hälften 48 der Axiallager ebenfalls jeweils Sensoren aufweisen und über eine gemeinsame Lageregelung 60 geregelt sind.

Jede der Magnetlagereinheiten 34 und 36 ist zusätzlich noch jeweils mit einem Fanglager 62 versehen, wobei das Fanglager 62 jeweils als Radial- und Axiallager ausgeführt ist und dazu dient, die Rotoreinheit 26 bei abgeschalteten oder ausfallenden Magnetlagereinheiten 34, 36 aufzufangen und Kollisionen, beispielsweise in der Gasturbine 12 oder dem Generator 14 zu verhindern.

Die Lageregelungen 44 der Radiallager 38 der Magnetlagereinheiten 34 und 36 sind vorzugsweise ferner so ausgebildet, daß sie unterhalb einer festgelegten Drehzahl die Rotoreinheit 26 um ihre geometrische Mittelachse als Drehachse 32 rotierend lagern. Bei Überschreiten der festgelegten Drehzahl erfolgt eine Lagerung um die Schwerpunktachse der Rotoreinheit 26 als Drehachse 32, so daß in diesem Zustand eine quasi kräftefreie und selbstzentrierte Lagerung der Rotoreinheit 26 erreichbar ist.

Der Generator 14 umfaßt neben dem Rotor 30 noch einen Stator 70 und ist als permanent erregter Synchrongenerator ausgebildet, wobei der Rotor elektrisch passiv ist und, wie in Fig. 2 dargestellt, auf der Welle 28 sitzende und als Segmente angeordnete Hochenergiemagnete 72 trägt, welche radial zur Drehachse 32 durch eine Bandage 74 gesichert sind.

Zur Kühlung des Stators 70, welcher seinerseits Spulenwicklungen 76 trägt, ist der Stator 70 mit im Stator 70 um die Drehachse 32 umlaufenden Kühlkanälen 78 versehen, welche mit einer Kühlwasserzuleitung 80 und einer Kühlwasserableitung 82 verbunden und somit von Kühlwasser durchströmbar sind.

Das Anlagengehäuse 10 bildet mit einem ersten Abschnitt 90 ein Turbinengehäuse für die Gasturbine 12 und umschließt den Turbineninnenraum 20 gasdicht und druckfest.

Darüber hinaus bildet das Anlagengehäuse 10 mit einem zweiten Abschnitt ein Generatorgehäuse 92, welches einen Generatorinnenraum 94 ebenfalls druckfest und gasdicht umschließt. In diesem Generatorinnenraum 94 sind der Stator 70, der Rotor 30 sowie die Magnetlagereinheiten 34 und 36 angeordnet. Alle in dem Generatorinnenraum führenden elektrischen Zuleitungen sind dabei durch druckfeste Kabeldurchführungen 95 geführt.

Ferner führt vom Generatorinnenraum 94 ein Verbindungskanal 96 zum Turbineninnenraum 20, wobei sich durch diesen Verbindungskanal 96 die Welle 28 der Rotoreinheit hindurcherstreckt, welche auf ihrem freien, sich in den Turbineninnenraum 20 hineinerstreckenden Ende das Turbinenrad 22 trägt.

Dabei bildet der Turbineninnenraum 20 über den Verbindungskanal 96 mit dem Generatorinnenraum 94 einen gasdicht und druckfest abgeschlossenen Raum, in welchem sich die Rotoreinheit 26 beim Betrieb der Stromgewinnungsanlage berührungslos dreht.

Um einen Leckgasstrom von dem Turbineninnenraum 20 in den Generatorinnenraum 94 zu drosseln, ist in dem Verbindungskanal 96 noch eine Labyrinthdichtung 98 vorgesehen, so daß nur ein geringer Teil des Prozeßgases vom Turbineninnenraum 20 in den Generatorinnenraum 94 strömt.

Im einfachsten Fall dient der vom Turbineninnenraum 20 in den Generatorinnenraum 94 eintretende Leckgasstrom als Kühlgas, welches den Generatorinnenraum 94 in axialer Richtung von der Gasturbine 12 weg durchströmt, dabei die Rotoreinheit 26 umströmt und die Magnetlagereinheiten 34, 36 kühlt.

Zur zusätzlichen oder alternativen Kühlung der Magnetlagereinheiten 34, 36 ist ein Kühlgaseinlaßkanal 100 vorgesehen, welcher zwischen der Labyrinthdichtung 98 und der dem Turbinenrad 22 zugewandten Magnetlagereinheit 34 mündet und Kühlgas auf die Rotoreinheit 26 in diesem Bereich strömen läßt. Dieses Kühlgas durchströmt zunächst die Magnetlagereinheit 34 im wesentlichen in axialer Richtung 102 dann einen Spalt zwischen dem Rotor 30 und dem Stator 70 und daraufhin ebenfalls in axialer Richtung 102 von der Gasturbine 12 weg die Magnetlagereinheit 36 und sammelt sich wie auch der Leckgasstrom in einem hinteren Abschnitt 104 des Generatorinnenraums 94, von welchem es über einen Kühlgasauslaßkanal 106 abgeführt und einer Gasrückführung 108 zugeführt wird, welche das Kühlgas wieder dem Kühlgaseinlaßkanal 100 zuführt.

Vorzugsweise wird als Kühlgas dasselbe Gas wie das die Gasturbine 12 antreibende Prozeßgas eingesetzt, so daß überschüssiges Kühlgas dem Prozeßgas wieder zuführbar ist und außerdem von dem Turbineninnenraum 20 in den Generatorinnenraum 94 eintretendes Prozeßgas keinerlei Verunreinigung erfährt, sondern im Gegenteil das von dem Turbineninnenraum 20 in den Generatorinnenraum 94 eintretende Leckgas ebenfalls als Kühlgas eingesetzt wird, dessen Kühlwirkung fakultativ durch das über den Kühlgaseinlaßkanal extern zugeführte Kühlgas ergänzt wird.

Die Zufuhr des Kühlgases erfolgt vorzugsweise so, daß in dem Generatorinnenraum ein Druck vorliegt, welcher ungefähr dem Druck des Prozeßgases im Auslaßkanal 24 entspricht, um die Gasreibung im Generatorinnenraum möglichst niedrig zu halten.

Der von dem permanent erregten Synchrongenerator erzeugte Strom wird schließlich einem Umrichter 110 zugeführt, welcher diesen in einen Wechselstrom mit einer Netzfrequenz und einer Netzspannung umsetzt, welche eine Einspeisung in ein öffentliches Stromversorgungsnetz erlaubt.

## Patentansprüche

1. Stromgewinnungsanlage umfassend eine Gasturbine (12) mit einem Turbinenrad (22) und einen Generator (14) mit einem vom Turbinenrad (22) angetriebenen Rotor (30), wobei die Turbine (12) und der Generator (14) zu einer Einheit zusammengefaßt sind und das Turbinenrad (22) und der Rotor (30) eine sich als Ganzes drehende Rotoreinheit (26) bilden, die in dem Anlagengehäuse (10) durch Magnetlagereinheiten (34, 36) berührungslos drehbar gelagert ist, und wobei das Anlagengehäuse (10) einen Turbineninnenraum (20) der Turbine (12) und einen Generatorinnenraum (94) des Generators (40) druckfest und gasdicht umschließt, dadurch gekennzeichnet, daß der Generator (14) als Synchrongenerator ausgebildet ist, dessen Rotor (30) auf der Welle (28) sitzende und radial zur Drehachse (32) durch eine Bandage (74) gesicherte Magnete (72) trägt, daß der Generatorinnenraum (94) von einem Kühlgas durchströmt ist, welches einen Spalt zwischen dem Rotor (30) und dem Stator (70) durchströmt und dabei die Rotoreinheit (26) oberflächlich kühlt und daß der Generatorinnenraum (94) auf einem gegenüber dem Gaseinlaß abgesenkten Druckniveau gehalten ist, welches die Gasreibung im Generatorinnenraum (94) reduziert.

2. Stromgewinnungsanlage nach Anspruch 1, dadurch gekennzeichnet, daß die Rotoreinheit (26) axial gesehen beiderseits des Rotors (30) mit jeweils einer Magnetlagereinheit (34, 36) gelagert ist.

3. Stromgewinnungsanlage nach Anspruch 2, dadurch gekennzeichnet, daß eine der Magnetlagereinheiten (34) zwischen dem Rotor (30) und dem Turbinenrad (22) angeordnet ist.

4. Stromgewinnungsanlage nach einem der voranstehenden Ansprüche, dadurch gekennzeichnet, daß jede Magnetlagereinheit (34, 36) ein magnetisches Radiallager (38) umfaßt.

5. Stromgewinnungsanlage nach einem der voranstehenden Ansprüche, dadurch gekennzeichnet, daß einer der Magnetlagereinheiten (34, 36) ein magnetisches Axiallager (48) zugeordnet ist.

6. Stromgewinnungsanlage nach Anspruch 5, dadurch gekennzeichnet, daß jede Magnetlagereinheit (34, 36) die Rotoreinheit (26) gegen eine Bewegung des Rotors (30) in jeweils entgegengesetzte axiale Richtungen magnetisch lagert.

7. Stromgewinnungsanlage nach einem der voranstehenden Ansprüche, dadurch gekennzeichnet, daß die magnetische Lagerung der Rotoreinheit (26) durch die Magnetlagereinheiten (34, 36) eine aktive magnetische Lagerung darstellt.

8. Stromgewinnungsanlage nach Anspruch 7, dadurch gekennzeichnet, daß die aktive magnetische Lagerung eine Lageregelung (44) mit Sensoren aufweist, welche die Rotoreinheit (26) in einer bestimmten Position führt.

9. Stromgewinnungsanlage nach Anspruch 8, dadurch gekennzeichnet, daß durch Ansteuerung des Stators (42) der Radiallager (38) eine Drehachse (32) der Rotoreinheit (26) festlegbar ist.

10. Stromgewinnungsanlage nach Anspruch 9, dadurch gekennzeichnet, daß die Lageregelung (44) oberhalb einer bestimmten Drehzahl als Drehachse (32) für die Rotoreinheit (26) die Schwerpunktachse auswählt.

11. Stromgewinnungsanlage nach einem der Ansprüche 4 bis 10, dadurch gekennzeichnet, daß das Radiallager (38) auf eine Welle (28) der Rotoreinheit (26) aufgeschrumpfte Blechpakete (40) und einen im Anlagengehäuse (10) angeordneten Ständer (41) umfaßt.

12. Stromgewinnungsanlage nach einem der Ansprüche 5 bis 11, dadurch gekennzeichnet, daß das Axiallager (48) eine auf einer Welle (28) der Rotoreinheit (26) sitzende ferromagnetische Scheibe (50) und einen im Anlagengehäuse (10) angeordneten Ständer (52) umfaßt.

13. Stromgewinnungsanlage nach einem der voranstehenden Ansprüche, dadurch gekennzeichnet, daß die Rotoreinheit (26) durch bei Ausfall der Magnetlagereinheit (34, 36) wirksame Fanglager (62) gelagert ist.

14. Stromgewinnungsanlage nach einem der voranstehenden Ansprüche, dadurch gekennzeichnet, daß vom Generatorinnenraum (94) ein von der Rotoreinheit (26) durchsetzter Verbindungskanal (96) zum Turbineninnenraum (20) führt und daß der Generatorinnenraum (94), der Verbindungskanal (96) und der Turbineninnenraum (20) von dem Anlagengehäuse (10) gasdicht und druckfest umschlossen sind.

15. Stromgewinnungsanlage nach einem der voranstehenden Ansprüche, dadurch gekennzeichnet, daß die Magnetlagereinheiten (34, 36) von einem Kühlgas durchströmbar sind.

16. Stromgewinnungsanlage nach Anspruch 15, dadurch gekennzeichnet, daß das Kühlgas die Magnetlagereinheiten (34, 36) im wesentlichen in axialer Richtung durchströmt.

17. Stromgewinnungsanlage nach einem der Ansprüche 1 bis 16, dadurch gekennzeichnet, daß das Kühlgas mit dem die Turbine (12) treibenden Prozeßgas identisch ist.

18. Stromgewinnungsanlage nach Anspruch 17, dadurch gekennzeichnet, daß das Kühlgas aus dem die Turbine (12) durchströmenden Prozeßgasstrom stammt.

19. Stromgewinnungsanlage nach einem der Ansprüche 14 bis 18, dadurch gekennzeichnet, daß das Kühlgas das von dem Turbineninnenraum (20) in den Generatorinnenraum (94) durch den Verbindungskanal (96) einströmendes Leckgas ist.

20. Stromgewinnungsanlage nach einem der Ansprüche 15 bis 19, dadurch gekennzeichnet, daß zur Kühlung der Magnetlagereinheiten (34, 36) externes Kühlgas zuführbar und wieder abführbar wird.

21. Stromgewinnungsanlage nach Anspruch 20, dadurch gekennzeichnet, daß das externe Kühlgas in axialer Richtung von der Turbine (12) weg die Magnetlagereinheiten (34, 36) durchströmt.

22. Stromgewinnungsanlage nach einem der Ansprüche 20 oder 21, dadurch gekennzeichnet, daß das externe Kühlgas zwischen dem Turbinenrad (22) und der dem Turbinenrad (22) nächstliegenden Magnetlagereinheit (34) zuführbar wird.

23. Stromgewinnungsanlage nach einem der Ansprüche 1 bis 22, dadurch gekennzeichnet, daß das Kühlgas auf einer der Turbine (12) abgewandten Seite aus dem Generatorinnenraum (94) abführbar ist.

24. Stromgewinnungsanlage nach einem der Ansprüche 14 bis 23, dadurch gekennzeichnet, daß in dem Verbindungskanal (96) ein gasstromreduzierendes Element (98) angeordnet ist.

25. Stromgewinnungsanlage nach einem der voranstehenden Ansprüche, dadurch gekennzeichnet, daß der Generator (14) ein permanent erregter Synchrongenerator ist.

26. Stromgewinnungsanlage nach Anspruch 25, dadurch gekennzeichnet, daß der Rotor (30) ein elektrisch passiver Rotor ist.

27. Stromgewinnungsanlage nach einem der voranstehenden Ansprüche, dadurch gekennzeichnet, daß der Stator (70) gekühlt ist.

28. Stromgewinnungsanlage nach Anspruch 27, dadurch gekennzeichnet, daß der Stator (70) flüssigkeitsgekühlt ist.

29. Stromgewinnungsanlage nach einem der voranstehenden Ansprüche, dadurch gekennzeichnet, daß dem Generator (14) ein Umrichter (110) zur Erzeugung einer üblichen standardisierten Netzspannung mit standardisierter Netzfrequenz für ein öffentliches Stromversorgungsnetz nachgeschaltet ist.

30. Stromgewinnungsanlage nach einem der voranstehenden Ansprüche, dadurch gekennzeichnet, daß die Turbine (12) eine Expansionsturbine ist.

## Claims

1. Power recovery plant comprising a gas turbine (12) with a turbine wheel (22) and a generator (14) with a rotor (30) driven by the turbine wheel (22), the turbine (12) and the generator (14) being combined to form one unit, and the turbine wheel (22) and the rotor (30) forming a rotor unit (26) rotating as a whole and being rotatably mounted in the plant housing (10) by magnetic bearing units (34, 36) in a non-contacting manner, and the plant housing (10) enclosing a turbine interior (20) of the turbine (12) and a generator interior (94) of the generator (14) in a pressure-resistant and gas-tight manner,
characterized in that the generator (14) is designed as a synchronous generator whose rotor (30) carries magnets (72) seated on the shaft (28) and secured radially in relation to the axis of rotation (32) by a binding (74), in that a cooling gas flows through the generator interior (94), said cooling gas flowing through a gap between the rotor (30) and the stator (70) and thus cooling the rotor unit (26) at the surface thereof, and in that the generator interior (94) is kept at a pressure level which is below the pressure at the gas inlet and reduces the gas friction in the generator interior (94).

2. Power recovery plant as defined in claim 1, characterized in that the rotor unit (26), when viewed axially, is mounted with one respective magnetic bearing unit (34, 36) on either side of the rotor (30).

3. Power recovery plant as defined in claim 2, characterized in that one of the magnetic bearing units (34) is arranged between the rotor (30) and the turbine wheel (22).

4. Power recovery plant as defined in any one of the preceding claims, characterized in that each magnetic bearing unit (34, 36) comprises a magnetic radial bearing (38).

5. Power recovery plant as defined in any one of the preceding claims, characterized in that a magnetic axial bearing (48) is associated with one of the magnetic bearing units (34, 36).

6. Power recovery plant as defined in claim 5, characterized in that each magnetic bearing unit (34, 36) magnetically mounts the rotor unit (26) against any movement of the rotor (30) in opposite axial directions.

7. Power recovery plant as defined in any one of the preceding claims, characterized in that the magnetic mounting of the rotor unit (26) by the magnetic bearing units (34, 36) constitutes an active magnetic mounting.

8. Power recovery plant as defined in claim 7, characterized in that the active magnetic mounting comprises a positioning control (44) with sensors for guiding the rotor unit (26) in a specific position.

9. Power recovery plant as defined in claim 8, characterized in that by controlling the stator (42) of the radial bearings (38) an axis of rotation (32) of the rotor unit (26) is determinable.

10. Power recovery plant as defined in claim 9, characterized in that above a particular rotational speed the positioning control (44) selects the neutral axis as axis of rotation (32) for the rotor unit (26).

11. Power recovery plant as defined in any one of claims 4 to 10, characterized in that the radial bearing (38) comprises stacks of sheets (40) shrunk onto a shaft (28) of the rotor unit (26) and a frame (41) arranged in the plant housing (10).

12. Power recovery plant as defined in any one of claims 5 to 11, characterized in that the axial bearing (48) comprises a ferromagnetic disk (50) seated on a shaft (28) of the rotor unit (26) and a frame (52) arranged in the plant housing (10).

13. Power recovery plant as defined in any one of the preceding claims, characterized in that the rotor unit (26) is mounted by catching bearings (62) which are effective upon failure of the magnetic bearing unit (34, 36).

14. Power recovery plant as defined in any one of the preceding claims, characterized in that a connecting passage (96) penetrated by the rotor unit (26) leads from the generator interior (94) to the turbine interior (20), and in that the generator interior (94), the connecting passage (96) and the turbine interior (20) are enclosed by the plant housing (10) so as to be gas-tight and pressure-resistant.

15. Power recovery plant as defined in any one of the preceding claims, characterized in that the magnetic bearing units (34, 36) are adapted to have a cooling gas flow through them.

16. Power recovery plant as defined in claim 15, characterized in that the cooling gas flows through the magnetic bearing units (34, 36) essentially in axial direction.

17. Power recovery plant as defined in any one of claims 1 to 16, characterized in that the cooling gas is identical to the process gas driving the turbine (12).

18. Power recovery plant as defined in claim 17, characterized in that the cooling gas originates from the stream of process gas flowing through the turbine (12).

19. Power recovery plant as defined in any one of claims 14 to 18, characterized in that the cooling gas is the leakage gas flowing from the turbine interior (20) into the generator interior (94) through the connecting passage (96).

20. Power recovery plant as defined in any one of claims 15 to 19, characterized in that for cooling the magnetic bearing units (34, 36) external cooling gas is suppliable and withdrawable again.

21. Power recovery plant as defined in claim 20, characterized in that the external cooling gas flows through the magnetic bearing units (34, 36) in axial direction away from the turbine (12).

22. Power recovery plant as defined in either one of claims 20 or 21, characterized in that the external cooling gas is suppliable between the turbine wheel (22) and the magnetic bearing unit (34) located closest to the turbine wheel (22).

23. Power recovery plant as defined in any one of claims 1 to 22, characterized in that the cooling gas is withdrawable from the generator interior (94) on a side remote from the turbine (12).

24. Power recovery plant as defined in any one of claims 14 to 23, characterized in that a gas-flow reducing element (98) is arranged in the connecting passage (96).

25. Power recovery plant as defined in any one of the preceding claims, characterized in that the generator (14) is a permanently excited synchronous generator.

26. Power recovery plant as defined in claim 25, characterized in that the rotor (30) is an electrically passive rotor.

27. Power recovery plant as defined in any one of the preceding claims, characterized in that the stator (70) is cooled.

28. Power recovery plant as defined in claim 27, characterized in that the stator (70) is liquid-cooled.

29. Power recovery plant as defined in any one of the preceding claims, characterized in that a frequency converter (110) for generating a customary standardized supply voltage with a standardized supply frequency for a public power supply network is connected to the output of the generator (14).

30. Power recovery plant as defined in any one of the preceding claims, characterized in that the turbine (12) is an expansion turbine.

## Revendications

1. Installation de production d'électricité comportant une turbine à gaz (12) avec une roue de turbine (22) et comportant un générateur (14) avec un rotor (30) entraîné par la roue de turbine (22), dans laquelle la turbine (12) et le générateur (14) sont regroupés en une unité, et la roue de turbine (22) et le rotor (30) forment une unité de rotor (26) qui tourne dans son ensemble et qui est montée en rotation sans contact au moyen d'unités de palier magnétique (34, 36) dans le carter (10) de l'installation, et dans laquelle le carter (10) entoure de façon résistante à la pression et étanche aux gaz une chambre intérieure (20) de la turbine (12) et une chambre intérieure (94) du générateur (14), caractérisée en ce que le générateur (14) est réalisé sous forme de générateur synchrone dont le rotor (30) porte des aimants (72) posés sur l'arbre (28) et bloqués radialement par rapport à l'axe de rotation (32) par un bandage (74), en ce que la chambre intérieure (94) du générateur est traversée par un gaz de refroidissement qui traverse un intervalle entre le rotor (30) et le stator (70) en refroidissant l'unité de rotor (26) à sa surface, et en ce que la chambre intérieure (94) du générateur est maintenue à un niveau de pression abaissé par rapport à l'entrée de gaz, qui réduit la friction du gaz dans la chambre intérieure (94) du générateur.

2. Installation de production d'électricité selon la revendication 1, caractérisée en ce que l'unité de rotor (26) est montée, en vue axiale, des deux côtés du rotor (30) par une unité de palier magnétique respective (34, 36).

3. Installation de production d'électricité selon la revendication 2, caractérisée en ce que l'une des unités de palier magnétique (34) est agencée entre le rotor (30) et la roue de turbine (22).

4. Installation de production d'électricité selon l'une quelconque des revendications précédentes, caractérisée en ce que chaque unité de palier magnétique (34, 36) comporte un palier magnétique radial (38).

5. Installation de production d'électricité selon l'une quelconque des revendications précédentes, caractérisée en ce qu'à l'une des unités de palier magnétique (34, 36) est associé un palier magnétique axial (48).

6. Installation de production d'électricité selon la revendication 5, caractérisée en ce que chaque unité de palier magnétique (34, 36) bloque magnétiquement l'unité de rotor (26) à l'encontre d'un mouvement du rotor (30) dans des directions axiales respectivement opposées.

7. Installation de production d'électricité selon l'une quelconque des revendications précédentes, caractérisée en ce que le montage magnétique de l'unité de rotor (26) par les unités de palier magnétique (34, 36) représente un montage magnétique actif.

8. Installation de production d'électricité selon la revendication 7, caractérisée en ce que le montage magnétique actif comprend un réglage de position (44) avec des palpeurs, qui amène l'unité de rotor (26) jusque dans une position déterminée.

9. Installation de production d'électricité selon la revendication 8, caractérisée en ce qu'un axe de rotation (32) de l'unité de rotor (26) est susceptible d'être fixé par pilotage du stator (42) des paliers radiaux (38).

10. Installation de production d'électricité selon la revendication 9, caractérisée en ce qu'au-dessus d'une vitesse de rotation déterminée, le réglage de position (44) choisit l'axe passant par le centre de gravité comme axe de rotation (32) pour l'unité de rotor (26).

11. Installation de production d'électricité selon l'une quelconque des revendications 4 à 10, caractérisée en ce que le palier radial (38) comporte des empilements de tôle (40) frettés sur un arbre (28) de l'unité de rotor (26), et un stator (41) agencé dans le carter d'installation (10).

12. Installation de production d'électricité selon l'une quelconque des revendications 5 à 11, caractérisée en ce que le palier axial (48) comporte un disque ferromagnétique (50) posé sur un arbre (28) de l'unité de rotor (26) et un stator (52) agencé dans le carter d'installation (10).

13. Installation de production d'électricité selon l'une quelconque des revendications précédentes, caractérisée en ce que l'unité de rotor (26) est montée par des paliers de secours (62) qui agissent lors d'une défaillance de l'unité de palier magnétique (34, 36).

14. Installation de production d'électricité selon l'une quelconque des revendications précédentes, caractérisée en ce qu'un canal de liaison (96) traversé par l'unité de rotor (26) mène depuis la chambre intérieure (94) du générateur jusqu'à la chambre intérieure (20) de la turbine, et en ce que la chambre intérieure (94) du générateur, le canal de liaison (96), et la chambre intérieure (20) de la turbine sont entourés par le carter (10) de façon étanche aux gaz et résistante à la pression.

15. Installation de production d'électricité selon l'une quelconque des revendications précédentes, caractérisée en ce que les unités de palier magnétique (34, 36) sont susceptibles d'être traversées par un gaz de refroidissement.

16. Installation de production d'électricité selon la revendication 15, caractérisée en ce que le gaz de refroidissement traverse les unités de palier magnétique (34, 36) sensiblement en direction axiale.

17. Installation de production d'électricité selon l'une quelconque des revendications 1 à 16, caractérisée en ce que le gaz de refroidissement est identique avec le gaz réactionnel entraînant la turbine (12).

18. Installation de production d'électricité selon la revendication 17, caractérisée en ce que le gaz de refroidissement provient du courant de gaz réactionnel qui traverse la turbine (12).

19. Installation de production d'électricité selon l'une quelconque des revendications 14 à 18, caractérisée en ce que le gaz de refroidissement est le gaz de fuite qui s'écoule depuis la chambre intérieure (20) de la turbine jusque dans la chambre intérieure (94) du générateur à travers le canal de liaison (96).

20. Installation de production d'électricité selon l'une quelconque des revendications 15 à 19, caractérisée en ce qu'un gaz de refroidissement externe peut être amené et évacué pour refroidir les unités de palier magnétique (34, 36).

21. Installation de production d'électricité selon la revendication 20, caractérisée en ce que le gaz de refroidissement externe traverse les unités de palier magnétique (34, 36) en direction axiale en éloignement de la turbine (12).

22. Installation de production d'électricité selon l'une ou l'autre des revendications 20 et 21, caractérisée en ce que le gaz de refroidissement externe peut être amené entre la roue de turbine (22) et l'unité de palier magnétique (34) la plus proche de la roue de turbine (22).

23. Installation de production d'électricité selon l'une quelconque des revendications 1 à 22, caractérisée en ce que le gaz de refroidissement peut être évacué hors de la chambre intérieure (94) du générateur sur un côté détourné de la turbine (12).

24. Installation de production d'électricité selon l'une quelconque des revendications 14 à 23, caractérisée en ce qu'il est prévu dans le canal de liaison (96) un élément (98) réduisant le courant de gaz.

25. Installation de production d'électricité selon l'une quelconque des revendications précédentes, caractérisée en ce que le générateur (14) est un générateur synchrone excité en permanence.

26. Installation de production d'électricité selon la revendication 25, caractérisée en ce que le rotor (30) est un rotor électriquement passif.

27. Installation de production d'électricité selon l'une quelconque des revendications précédentes, caractérisée en ce que le stator (70) est refroidi.

28. Installation de production d'électricité selon la revendication 27, caractérisée en ce que le stator (70) est refroidi par un liquide.

29. Installation de production d'électricité selon l'une quelconque des revendications précédentes, caractérisée en ce qu'il est prévu en aval du générateur (14) un convertisseur (110) pour générer une tension de secteur standardisée habituelle avec une fréquence de secteur standardisée pour un réseau public d'alimentation électrique.

30. Installation de production d'électricité selon l'une quelconque des revendications précédentes, caractérisée en ce que la turbine (12) est une turbine à expansion.
